**Europäisches Patentamt**

**European Patent Office**

**Office européen des brevets**

(19)

(11) Publication number: **0 278 592**
**A2**

(12) # EUROPEAN PATENT APPLICATION

(21) Application number: **88300189.3**

(51) Int. Cl.⁴: **A23B 4/00**

(22) Date of filing: **11.01.88**

(30) Priority: **13.01.87 GB 8700698**
**27.04.87 GB 8709926**

(43) Date of publication of application:
**17.08.88 Bulletin 88/33**

(84) Designated Contracting States:
**AT BE CH DE ES FR GB GR IT LI LU NL SE**

(71) Applicant: **Kichlu, Kamini**
**76 Wood Vale**
**London N10 3DN(GB)**

(72) Inventor: **Kichlu, Kamini**
**76 Wood Vale**
**London N10 3DN(GB)**

(74) Representative: **West, Alan Harry et al**
**R.G.C. Jenkins & Co. 26 Caxton Street**
**London SW1H 0RJ(GB)**

(54) **Method for the treatment of fish and meat.**

(57) Fish, meat and fish and meat products are subjected to radio frequency electromagnetic radiation while being maintained at below 27°C. Such a procedure is advantageous as part of a curing process involving salting and smoking, especially for fish such as salmon, but may also be used alone for tenderising meat.

EP 0 278 592 A2

# METHOD FOR THE TREATMENT OF FISH AND MEAT

This invention relates to the treatment of fish, meat and fish and meat products with radio frequency electromagnetic radiation.

Various procedures have been proposed over the years for subjecting a number of food products to electromagnetic radiation, including that having a frequency in the radio wave range, that is to say generally up to about 200 MHz. Such procedures can be classified into two quite distinct categories, one for the sterilisation and preservation of foodstuffs and the other for thawing or melting frozen or normally solidified food materials.

Within the category of food sterilisation and preservation, there may be mentioned U.S. Patent 3,945,170 which describes the radio frequency irradiation of fruit and vegetables after packaging in air-tight containers; U.S. Patent 3,272,636 which describes the treatment of food products such as carbonated beverages, fruit juices, dairy products, meat, bread and frozen products with an alternating electric field of radio frequency for controlling microorganisms; U.S. Patent 2,576,862 which describes the treatment of canned foodstuffs with electromagnetic waves of a radio carrier frequency for sterilising micro organisms; British Patent 695,541 which describes irradiating foods and medicines with short pulses of radiation in the IR, UV, X-ray and radio frequency ranges to destroy bacteria and viruses; and British Patent 390,131 which describes the sterilisation of foodstuffs by treatment with electromagnetic waves.

Within the category of thawing and melting, there are mentioned British Patents 928,452, 972,097, 978,952, 992,412 and 993,790 all of which describe techniques for thawing blocks of frozen fish or other sea food by subjecting the block to dielectric heating in a radio frequency electric field; and British Patent 932,848 which describes apparatus for radio frequency dielectric heating for the thawing and melting of blocks of butter, ice-cream, chocolate and frozen egg.

The present invention is based on the surprising observation that other advantageous effects can be obtained in fish and meat and in fish and meat products by subjecting them to radio-frequency radiation, provided that dielectric heating of the fish, meat or fish or meat product is suppressed or compensated for by cooling or refrigeration.

In accordance with the invention, therefore, there is provided a method for treating fish, meat or a fish or meat product which comprises subjecting the fish, meat or fish or meat product, while maintaining it at a temperature of not more than 27°C, to electromagnetic radiation in the radio frequency (RF) range.

The electromagnetic radiation preferably has a frequency of 5 to 50 MHz, especially 10 to 30 MHz and an energy of up to 5 kW, especially 0.2 to 0.6 kW, and the fish, meat or fish or meat product will generally be maintained at a temperature of not more than 10°C, especially not more than 5°C, while being subjected to the electromagnetic radiation.

The maintenance of such a temperature can be achieved by chilling the fish, meat or fish or meat product to a suitably low temperature prior to commencement of irradiation; or by cooling or refrigerating the fish, meat or fish or meat product during irradiation, for example by maintaining it in contact with a heat absorber such as a refrigerated surface, or by blowing chilled air over it; or by carrying out irradiation for such a short period of time or at such a low energy that the dielectric heating effect is insufficient to raise the temperature of the fish, meat or fish or meat product above the desired upper limit; or by a combination of any such measures.

According to a first aspect of the invention, the method may be used in an advantageous manner during the curing of fish and meat (including game and poultry), and fish and meat products, and is especially applicable to the curing of fish and fish products, more especially salmon. Although this particular aspect of the invention is described below with particular reference to salmon, it should be understood that it is equally applicable to other fish, to fish products and to meat, poultry, game and their by-products, for example liver, kidney and roe.

Traditional methods employed for the curing of salmon are largely manual, labor intensive and notoriously inaccurate and unpredictable and, of necessity, operated on a batch basis. Generally, salmon arrives at the smoke house already gutted. The fish are then beheaded, split open to remove the backbone, washed in cold running water and allowed to drain. The salmon fillets are then brined, for example by injecting into them a water solution of salt or salt and sugar or, more generally by sprinkling liberally by hand over the skinless upper side of the fillets dry salt or salt and sugar mixture. The fillets are then stacked about ten high, each fillet in the stack lying skin side down, and allowed to stand for 24 hours or more, during which time each fillet loses on average up to 10%, generally 8 to 10% of its initial weight. The fillets are then washed clean of salt allowed to drain, and placed on wire trays which are then arranged in the smoking kiln. Within the kiln the fillets are subjected to temperatures of no more than 26°C, in an atmosphere of smoke created by burning various woods in an adjacent oven. Smoking generally continues for 24 hours or so, during which time the fillets will lose on average up to a further 10%, generally 8 to 10%, of their initial weight.

Following smoking, the fillets are trimmed around their edges to remove the collar, the side fins and the tail. The pin bones running the length of both sides of the fish are then removed, and the fillets are then vacuum packed ready for sale. Alternatively, the fillets can be sliced from top to bottom, either by hand or with a mechanical circular cutter, or obliquely, in either case leaving behind the skin and the adjacent 5 mm layer of oily and discoloured flesh, and discarding the initial one of two slices (known as pellicle) which, because of its contact with the salt and smoke is much drier than the remainder of the fish.

The traditional curing method described above suffers quite clearly from a number of disadvantages, including the randomness of application of salt or salt and sugar during brining, the lack of uniformity of weight applied to the stacked fillets during brining, and the quantity of waste material generated during the curing and slicing procedures.

These disadvantages of the traditional curing method can be eliminated by utilising the method of the invention as part of the curing process in which the fish, meat or fish or meat product is first subjected to RF radiation according to the invention and subsequently subjected to smoking. The fish, meat or fish or meat product is preferably subjected to a succession of alternating irradiation and smoking steps and may have been previously treated to a salting process.

The most noteworthy advantage of using the method of the invention in such a curing process is that the time required for curing is very significantly reduced, to such an extent that the whole method is suitable for continuous operation, in contrast to the batch operation of the traditional method. A further significant advantage is that the method results in less waste than the traditional method.

These other advantages appear to depend directly or indirectly on the application to the fish, meat or fish or meat product as part of the smoking operation, of the RF radiation. Although the precise reason for this is not known, it is known that RF radiation can cause fish and meat fibres to open and separate to some extent, and it is suspected that this opens up the surface of the flesh to enable the smoke to penetrate the flesh more easily, and cause more rapid curing. In any event, it is true that, with the application of RF radiation, smoking for as little as 10 minutes can product a satisfactory cured product after brining for as short a time as 2 hours and with far less waste than with traditional methods.

In applying the method of the invention to the smoking of salmon, for example, the gutted salmon is beheaded and split open and the belly walls, fins, tail and backbone are removed. The skin may also be removed at this stage, if desired, although this is by no means essential. The trimmed fillet is then washed and placed on a moving endless belt and a measured predetermined quantity of salt or salt and sugar mixture is sprinkled over it. Instead of being stacked as in the traditional curing method, the salted fillets are allowed to stand for, say, 30 to 90 minutes, generally about 1 hour and then pressed lightly for, say, a further 30 to 90 minutes, generally about 1 hour to express excess moisture from within the fillet. The pressing force may be equivalent to as little as 25% of the weight of the fillet, applied over the area of the fillet. The fillet is then sprayed with water to remove excess salt, pad-mangled, washed again and pad-mangled a second time to remove excess surface moisture.

The moving belt carrying the fillets is then passed into a smoke cabinet, the fillets spending a period of from 15 to 30 minutes within the cabinet. During this time, the fillets are subjected to RF radiation, either continuously or intermittently, and a temperature of not more than about 27°C, and smoke produced by burning wood in an adjacent oven is continuously blown into the cabinet and circulated around the fillets. Upon leaving the smoke cabinet the cured fish can be vacuum packed or, after removal of the pin bones, sliced, as desired.

Alternatively, and preferably, smoking and RF irradiation are carried out in a series of short alternating steps, starting suitably with an irradiation step. In this manner, the electrodes used for generating the RF radiation can be maintained out of contact with the smoke, and fouling of the electrodes with deposits from the smoke can be avoided.

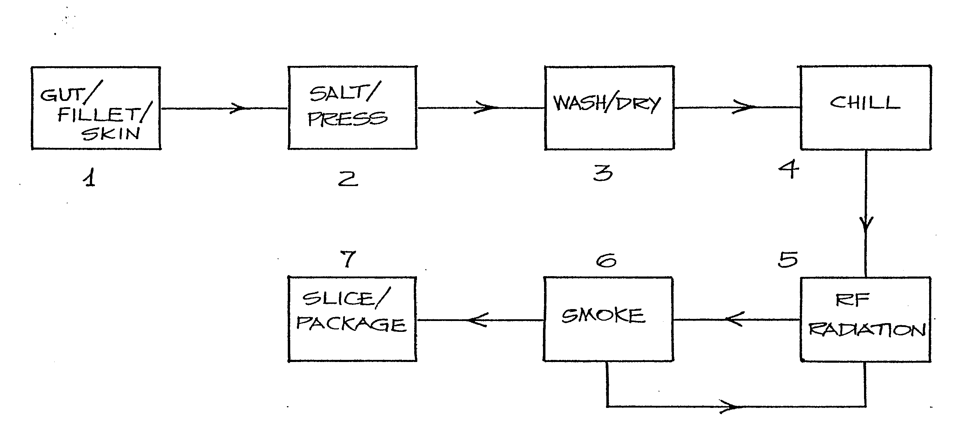

Operation of this aspect of the invention is illustrated schematically and by way of example only in the accompanying drawing, which is flow diagram of a fish curing process.

Referring to the drawing, fish such as salmon is gutted and split open at 1 to enable the spine to be removed. After removal of the tail and fins, and optionally the skin also, the filleted fish will generally be divided into two "sides" for further processing. The sides of salmon are then salted and, if desired, pressed, at 2 in the manner described above, and then washed and dried at 3.

The salt-impregnated sides of salmon are generally then chilled at 4, for example to a temperature of 0 or -5°C, and sent immediately to a radiation chamber 5 where they are irradiated with radio frequency waves. Immediately after irradiation, the sides are passed through a smoke chamber 6 where smoke is allowed to impregnate the flesh of the fish and provide the fish with its characteristic smoked flavour, colour and texture. The irradiation and smoking steps can be repeated any number of times, as desired, to obtain the required curing effect. Finally, the cured sides of salmon can be packaged for storage or shipment, or first sliced and then packaged, at 7.

The irradiation and smoking steps 5 and 6 must, of course, be carefully controlled to ensure that in accordance with the invention, the temperature of the sides of salmon does not rise above 27°C. Generally, however, it will be desired to maintain the temperature below 10°C or even 5°C and the inevitable dielectric heating effect of the radio frequency radiation can be compensated for by simultaneous cooling of the fish, for example by passing a flow of chilled air across the sides during irradiation. Nevertheless, since dieletric heating is not a surface phenomenon but will occur within the flesh of the fish, prolonged and/or high energy irradiation must be avoided in order to prevent interior overheating and cooking of the fish.

Although it is impossible to specify any general or precise figures for the duration, energy, frequency or temperature at which irradiation should be carried out, it will be clear to the skilled man that such factors will depend largely upon the weight and density of the fish to be treated and upon its initial temperature and moisture content and that the process parameters can be readily determined by initial trial and experimentation.

A radio frequency device which is conventionally used for melting normally solid food products such as chocolate, butter, vegetable fats and cocoa butter and which has a variable power output, can be readily adapted for use in the method of the invention, for example by including a suitable refrigeration system. Such a device is available from Petrie & McNaught Ltd, Rochdale, Lancashire, England under the name "Capenhurst RF Melter".

As stated above, it appears that the RF radiation opens up the fibrous structure of the fish, enabling far more effective penetration of the smoke and, as a consequence, more even and reproducible curing. This, in turn, means that the brining time can be drastically reduced compared to traditional curing and that the shelf life of the cured product will be greater. In addition, the reduced brining and smoking periods mean that the whole curing operations can be carried out on a continuous basis. Further, since the fish is subjected to the dehydrating effects of salt and smoke for far shorter periods of time, the formation of the dry pellicle layer can be avoided and hence a source of potential waste is eliminated.

The trimmings from the salmon, that is to say the collar, belly, fins and head, can also be brined and smoked simultaneously or passed through a microwave oven with water and a small amount of salt for, say, 5 minutes and, after being cooled, can be flaked and used as fresh salmon in salads or pate, for example.

In a modification of the method of the invention, the trimmed fillets are first frozen and sliced and then subjected to brining and smoking and RF radiation in the manner described above. The resulting cured slivers, depending upon their final moisture content, form a delicious snack, for example to accompany cocktails, or can be chopped and incorporated as a natural flavouring into such foods as scrambled eggs, cottage cheese, salads and soups or incorporated during manufacture into cheese and savoury crackers for example. Still further the moisture content of the cured sliced product can be reduced by say, 10 to 75%, preferably about say, 50% for example by partial freeze drying or by being passed through a warm oven, to enable it to be granulated and ground to a flour which can be used alone or with other flavouring materials in the manufacture of snack foods such as chips, or any of the numerous other known forms of dry snack foods. In all of these forms, the cured product will have an extremely long shelf life.

As stated above, the method of the invention is applicable to other types of fish, especially those that are traditionally subjected to salting and smoking or other curing techniques, such as herring, mackerel, trout, haddock and eels, to fish products such as roe, and to meat - including poultry and game - such as chicken, turkey, duck and goose and red meats and veal, and meat products such as liver and kidney.

Quite clearly, the precise conditions under which curing is carried out, for example the brining time, the smoking time and the frequency and energy of RF radiation will all depend upon the type of fish, meat or fish or meat product involved and can be determined without difficulty by simple trial and experiment. It will be apparent, however, that with some meats, such as chicken and turkey for example, different types of meat, that is to say white (breast) meat and dark (leg) meat are present together and final product quality may be improved by separating the two and curing them under slightly different conditions.

Also, in the case of the poultry and game, a more uniformly cured product may be obtained if the bones are first removed. In this respect, it has suprisingly been found that initial treatment with RF radiation, prior to brining and in the absence of smoke, eases removal of the bones.

According to a second aspect of the invention, the method of radio frequency irradiation may be used for the tenderising of meat and is applicable to all types of animal meat including that of cattle, sheep, pigs, poultry and game. The word "meat" is used below in this context in the generic sense to include the flesh of all such types of animals.

One of the most important qualities of meat used for human consumption is its tenderness, and it is the more tender cuts of meat, for example fillet steak, which command premium prices. However, such prime cuts generally account for less than 10% of the edible meat on a carcass, and the remaining 90% or more must be sold at lower prices. If these cheaper cuts are to be made more palatable, they must be tenderised or otherwise upgraded to resemble more closely the prime cuts.

Various tenderising techniques (other than prolonged cooking) have been proposed over the years, including applying a marinade or other chemical or quasi chemical treatment, physical pounding to break down the connective tissue or the administration to the animal prior to slaughter of a tenderising enzyme. These methods, however, have various disadvantages from the point of view of the animal or the consumer and do not always prove to be entirely effective.

According to this second aspect of the invention, therefore, there is provided a method for tenderising meat which comprises subjecting a cut of meat to electromagnetic radiation in the radio frequency range while maintaining the cut of meat at a temperature between -5°C and +5°C.

This method has the advantages that it avoids inhumane treatment of the animal prior to slaughter in that it is applied to already butchered meat, that (so far as permitted by present experimentation) it yields remarkably uniform and effective results, that it is straightforward and relatively inexpensive, and that it can be applied at any time between slaughter and final consumption of the meat.

This aspect of the method of the invention is capable of achieving quite remarkable and beneficial effects in such a relatively short period of time that it can be carried out conveniently during the butchering process in which the meat is cut into portions ready for sale (and, if desired, packaged, weighed, priced and labelled) or as part of any other preparation, cooking or packaging process, for example.

The advantages of this aspect of the invention also appear to be attributable directly to the application of RF radiation. Again, although the precise reason for the effects of the RF radiation is not known, it is known that RF radiation can cause meat fibres to separate to some extent and it is suspected that this opens up the surface and muscle structure of the meat thereby causing some break down of the connective tissue. This, in turn, means that cooking time can be reduced thereby enabling the natural flavours and juices of the meat to be more easily retained.

RF radiation treatment time can vary from as little as two minutes to as much as 30 minutes depending upon the degree of tenderising required or desired and upon the size of the cut being treated, but will generally be from five to twenty minutes.

In order to avoid any cooking effect on the meat during RF radiation treatment, it is essential that the meat is maintained at a relatively low temperature. Thus, the meat is preferably at about 0°C, for example between -5°C and +5°C at the start of treatment and may be cooled while being subjected to RF radiation. However, cooling may not be necessary if the temperature rise during treatment is less than 10°C, preferably less than 5°C. Also, where the meat has any significant and visible fat content, that fat is very likely to change colour during RF radiation treatment where a significant temperature increase is involved, and for this reason chilling of the meat during processing is highly desirable.

## Claims

1. A method for treating fish, meat or a fish or meat product which comprises subjecting the fish, meat or fish or meat product, while maintaining it at a temperature of not more than 27°C, to electromagnetic radiation in the radio frequency (RF) range.

2. A method according to claim 1, wherein the electromagnetic radiation has a frequency in the range of 5 to 50 MHz, especially 10 to 30 MHz.

3. A method according to claim 1 or claim 2, wherein the electromagnetic radiation has an energy of up to 5 kW, especially from 0.2 to 0.6 kW.

4. A method according to any one of claims 1 to 3, wherein the fish, meat or fish or meat product is maintained at a temperature of not more than 10°C, especially not more than 5°C, while being subjected to the electromagnetic radiation.

5. A method according to any one of claims 1 to 4, which is applied to fish, meat or a fish or meat product as part of a curing process and wherein the fish, meat or fish or meat product is subsequently subjected to smoking.

6. A method according to claim 5, wherein the fish, meat or fish or meat product is subjected to a succession of alternating irradiation and smoking steps.

7. A method according to claim 5 or claim 6, wherein the fish, meat or fish or meat product has been treated by a salting process prior to being subjected to irradiation.

8. A method for curing fish, which comprises the steps of

(i) salting the fish

(ii) washing and drying the fish from step (1) and

(iii) subjecting the fish from step (ii) to alternating irradiation and smoking treatment, the irradiation treatment being as defined in any one of claims 1 to 4.

9. A method according to claim 8, wherein the fish is a fillet.

10. A method according to claim 8 or claim 9, wherein the fish is salmon.

11. A method for tenderising meat which comprises subjecting a cut of meat to electromagnetic radiation in the radio frequency range while maintaining the cut of meat at a temperature between -5°C and +5°C.

12. A method according to any one of claims 1 to 11 which is carried out on a continuous basis.

13. Apparatus for use in carrying out the method of claim 1, comprising a housing containing means for supporting the fish, meat or fish or meat product to be treated; a source of electromagnetic radiation for irradiating the fish, meat or fish or meat product on the supporting means with radiation in the radio frequency range; and means for transmitting the fish, meat or fish or meat product at a temperature of not more than 28°C during irradiation.

14. Apparatus according to claim 13, wherein the supporting means comprises an endless belt which carries the fish, meat or fish or meat product into an out of the housing.

15. Apparatus according to claim 13 or claim 14, wherein the means for maintaining the fish, meat or fish or meat product at a temperature of not more than 27°C, comprises refrigeration means.

16. Apparatus according to claim 13 or claim 14, wherein the means for maintaining the fish, meat or fish or meat product at a temperature of not more than 27°C, comprises means for passing chilled air through the housing.

GUT/FILLET/SKIN 1 → SALT/PRESS 2 → WASH/DRY 3 → CHILL 4 → RF RADIATION 5 → SMOKE 6 → SLICE/PACKAGE 7